# EUROPEAN PATENT APPLICATION

(11) **EP 3 747 605 A1**
(43) Date of publication of application: **09.12.2020**
(21) Application number: 18913983.5
(22) Date of filing: 26.12.2018
(51) Int. Cl.: B25J 15/08, B25J 19/02, G01L 5/00

(54) **SENSOR MODULE AND ROBOT SYSTEM**

(30) Priority: 02.04.2018 JP 2018071072
(71) Applicant: Japan Aviation Electronics Industry, Ltd., 150-0043 Tokyo (JP)
(72) Inventor: TOMIOKA, Akihiro, Tokyo 150-0043 (JP); NOGUCHI, Hideyuki, Tokyo 150-0043 (JP); KAWATA, Naohiro, Tokyo 150-0043 (JP); ITO, Kenichi, Tokyo 150-0043 (JP); YONEDA, Masayoshi, Tokyo 150-0043 (JP)
(74) Representative: MERH-IP Matias Erny Reichl Hoffmann Patentanwälte PartG mbB
(86) International application number: PCT/JP2018/047750
(87) International publication number: WO 2019/193795

(57) **Abstract**

A sensor module of the present invention includes a flexible body and a sensor fixed to the outer surface of the body. The body is attachable to a robot hand having multiple fingers and is removable from the robot hand. The sensor is a proximity sensor or a tactile sensor. A position on the body where the sensor is fixed corresponds to a fingertip of a finger of the robot hand in a state where the sensor module is attached to the robot hand. The body has the shape of a glove, a finger cot, or a sheet.

## Description

### TECHNICAL FIELD

The present invention relates to a sensor module that can be mounted on a robot hand having multiple fingers, and a robot system having the robot hand on which the sensor module is mounted.

### BACKGROUND ART

A robot hand having multiple fingers can make motions similar to the motions of the human's hand, as well as making a motion to hold an object with fingertips, by using a joint mechanism that bends and extends the fingers.

Fig. 1 illustrates a robot hand described in Patent Literature 1. A skeleton part (not illustrated) being the skeleton of the robot hand is covered with a cover 11. The cover 11 includes a finger cover part 12 and a base cover part 13. The finger cover part 12 covers a finger of the skeleton part, and the base cover part 13 covers a base member of the skeleton part.

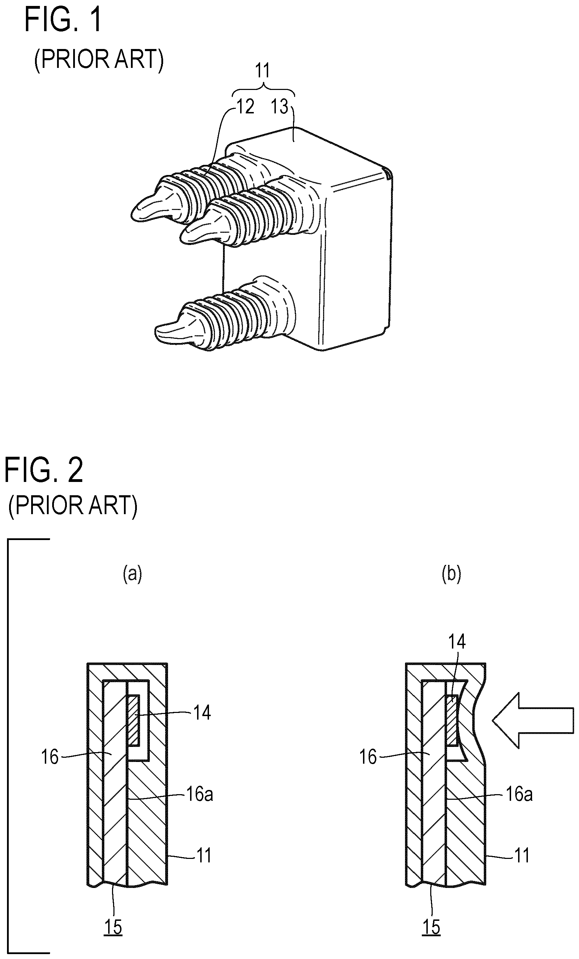

Fig. 2(a) is a schematic view illustrating a cross-sectional structure of a fingertip of the robot hand. A pressure sensor 14 detects pressure that is exerted on a fingertip portion 16 of a finger 15 of the skeleton part by an object (not illustrated) during the motion of the finger 15. The pressure sensor 14 is provided on the surface on a pad 16a side of the fingertip portion 16.

Fig. 2(b) illustrates a state where, at the motion of the finger 15, the cover 11 contacts the object and is deformed, and the inner surface of the cover 11 contacts the pressure sensor 14.

### PRIOR ART LITERATURE

### PATENT LITERATURE

Patent literature 1: Japanese Patent Application Laid-Open No. 2016-203264

### SUMMARY OF THE INVENTION

### PROBLEMS TO BE SOLVED BY THE INVENTION

By providing a tactile sensor (e.g., pressure sensor) at the fingertip of the robot hand, it is possible to detect contact with an object to be gripped and operated, and it is further possible to grip the object with an appropriate gripping force.

In the conventional robot hand, the tactile sensor is incorporated in the robot hand as a component of the robot hand. Therefore, for example, in the case of replacement or repair of the tactile sensor, it is necessary to perform the disassembly operation of the robot hand. In other words, it has not been easy to either attach the tactile sensor to the robot or remove the tactile sensor from the robot hand.

An object of the present invention is to provide a sensor module that can facilitate attaching the sensor to the robot hand and removing the sensor from the robot hand, and a robot system including the sensor module.

### MEANS TO SOLVE THE PROBLEMS

A sensor module of the present invention includes a flexible body and a sensor fixed to the outer surface of the body. The body is attachable to a robot hand having multiple fingers and is removable from the robot hand. The sensor is a proximity sensor or a tactile sensor. A position on the body where the sensor is fixed corresponds to a fingertip of a finger of the robot hand in a state where the sensor module is attached to the robot hand.

### EFFECTS OF THE INVENTION

According to the present invention, the sensor is fixed to the flexible body easy to attach to the robot hand and easy to remove from the robot hand. Hence it is easy to both attach the sensor to the robot hand and remove the sensor from the robot hand.

### BRIEF DESCRIPTION OF THE DRAWINGS

Fig. 1 is a perspective view of a conventional example of a robot hand;
Fig. 2 is a sectional view of the fingertip of the robot hand, where Fig. 2(a) is a sectional view of the fingertip of the robot hand illustrated in Fig. 1, and Fig. 2(b) is a sectional view of the fingertip of the robot hand in a state where a cover is deformed;
Fig. 3 is a view illustrating an example of the robot hand;
Fig. 4 is a view illustrating a sensor module of a first embodiment;
Fig. 5 is a view illustrating a sensor module of a second embodiment;
Fig. 6 is a view illustrating a sensor module of a third embodiment;
Fig. 7 is a view illustrating a sensor module of a fourth embodiment; and
Fig. 8 is a view illustrating a sensor module of a fifth embodiment, where Fig. 8(a) is a plan view, and Fig. 8(b) is a sectional view.

### DETAILED DESCRIPTION OF THE EMBODIMENTS

Embodiments of the present invention will be described with reference to the drawings.

### [FIRST EMBODIMENT]

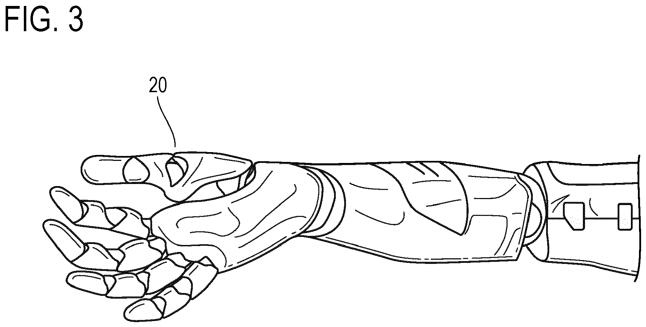

Fig. 3 illustrates an example of a robot hand on which a sensor module of an embodiment of the present invention is to be mounted. A robot hand 20 has five fingers and has a form very close to that of the human hand.

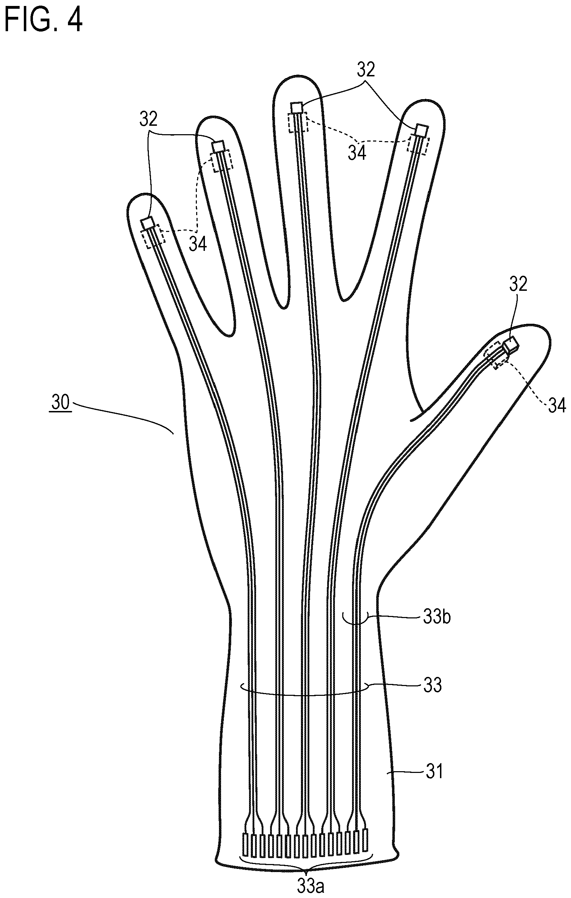

Fig. 4 illustrates a configuration of a sensor module 30 that can be mounted on the robot hand 20. The sensor module 30 includes a flexible body 31, five sensors 32, and sensor wiring 33, the body 31 having the shape of a glove with five fingers. The sensor 32 and the sensor wiring 33 are fixed to the outer surface of the body 31.

The material of the body 31 is a material that adheres to the robot hand 20, such as silicone rubber. The body 31 is, simply put, a glove, so that it is possible to easily attach the sensor module 30 to the robot hand 20 and to easily remove the sensor module 30 from the robot hand 20.

One sensor 32 is provided at the fingertip of each finger of the body 31. That is, a position on the body 31 where the sensor 32 is fixed is a position corresponding to the fingertip of the finger of the robot hand 20 in a state where the sensor module 30 has been put on the robot hand 20.

The sensor 32 is, for example, a proximity sensor. In the present specification, the term "proximity sense" is defined as "a sense that is not in humans, and a sense felt as if the sense of touch has spread up to several centimeters above the human skin." The proximity sensor is a sensor that, in a state where the robot hand has come several millimeters to tens of centimeters close to an object, detects a space distance, a relative angle, object surface characteristics, and the like. The proximity sensor of this example is a light-reflecting proximity sensor which includes an infrared light-emitting diode and a phototransistor to measure the space distance from the object with the amount of reflected light.

The sensor wiring 33 includes five conductive wire sets 33b extending from five sensors 32 to a wrist portion of the body 31. One conductive wire set 33b is connected to one sensor 32. One conductive wire set 33b includes a conductive wire for a power supply of the light-emitting diode, a conductive wire for a detection signal of the phototransistor, a conductive wire for a ground (GND) of each of the light-emitting diode and the phototransistor. Each conductive wire has one terminal 33a at the wrist-side end.

The sensor wiring 33 is formed by printing (e.g., screen printing) on the body 31 flattened. Forming the sensor wiring 33 by printing can lead to reduction in the manufacturing cost of the sensor wiring 33.

The sensor 32 is fixed onto the body 31 by being soldered to a pad (hidden and invisible in Fig. 4) formed at the fingertip-side end of the conductive wire.

In a state where the sensor module 30 configured as described above has been put on the robot hand 20, wiring (not illustrated) of a control device, which controls the drive of the robot hand 20, is connected to the terminal 33a of the sensor wiring 33 of the sensor module 30. Thereby, the robot hand 20 is controlled in accordance with a detection signal of the sensor 32.

In this example, with the sensor 32 being the proximity sensor that detects the distance to the object, the approach of the object can be reliably detected, whereby it is possible to avoid collision with the object and to further achieve soft contact. In this regard, after the contact with the object, for example, a force for gripping the object cannot be controlled using the detection signal of the proximity sensor. However, when the object is a known object, by setting a predetermined gripping force in advance in the control device for the robot hand, it is possible to grip the object with the predetermined gripping force even after the contact.

The sensor module 30 described above is a glove-type device to which the sensor 32 is attached, the sensor 32 being required for controlling the robot hand 20 that grips and operates the object. Therefore, only by attaching the sensor module 30 to the robot hand 20, the sensor 32 can be easily attached to the robot hand 20. Further, only by removing the sensor module 30 from the robot hand 20, the sensor 32 can be easily removed from the robot hand 20. In the case of replacement or repair of the sensor 32, the sensor 32 can be removed from the robot hand 20 only by removing the sensor module 30 from the robot hand 20, so that it is unnecessary to perform the disassembly operation of the robot hand 20 itself, and some other operation. In addition, a change in the type of sensor 32 can be achieved by a simple operation of replacing the sensor module 30.

For robots (or robot systems) used in the medical field and the food handling field, the hygiene management of the robot hand 20 is important. In this regard, with the sensor module 30 having the glove-like structure to be put on the robot hand 20, the hygiene management of the robot hand 20 can be easily performed by using the sensor module 30 as a disposable product.

In the first embodiment, for each conductive wire set 33b, a micro-controller unit (MCU) 34 having an analog-to-digital conversion function may be placed between the sensor 32 and three terminals 33a. Preferably, the MCU 34 is located as close as possible to the sensor 32. Digitizing the detection signal of the sensor 32 can lead to improvement in the signal quality (noise immunity) of the detection signal.

Second to fifth embodiments will be described below, but detailed descriptions thereof will be omitted by denoting the same reference numerals to components corresponding to those of the first embodiment.

### [SECOND EMBODIMENT]

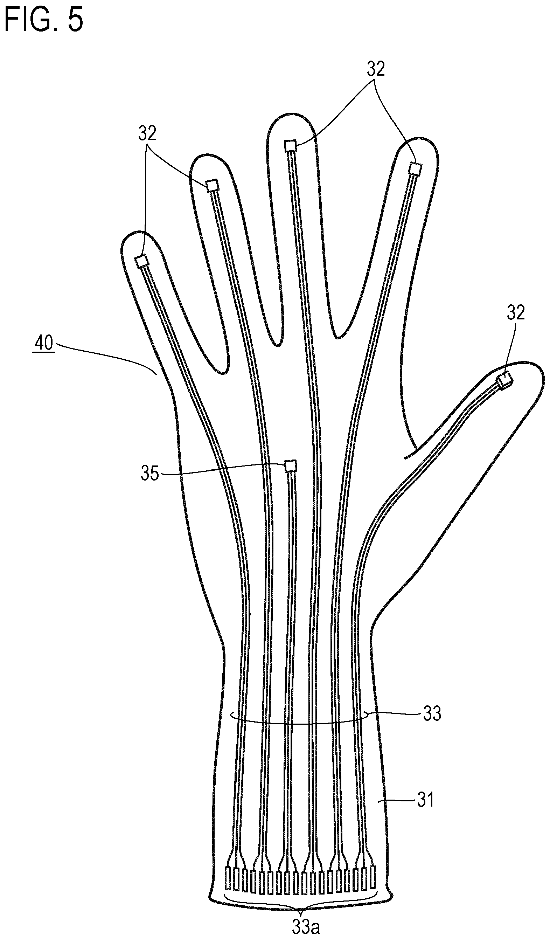

Fig. 5 illustrates a configuration of a sensor module 40 of the second embodiment. The sensor module 40 has a configuration with one proximity sensor 35 added to the outer surface of a palm part of the body 31 in the sensor module 30 of the first embodiment. A position on the body 31 where the proximity sensor 35 is fixed is a position corresponding to the palm part of the robot hand 20 in a state where the sensor module 40 has been put on the robot hand 20.

The proximity sensor 35 is a light-reflecting proximity sensor in this example. In a case where the proximity sensor 35 is fixed to a position on the sensor module 40 corresponding to the palm part of the robot hand 20, it is possible to control the movement of the entire robot hand 20 with respect to the object by a detection signal of the proximity sensor 35.

### [THIRD EMBODIMENT]

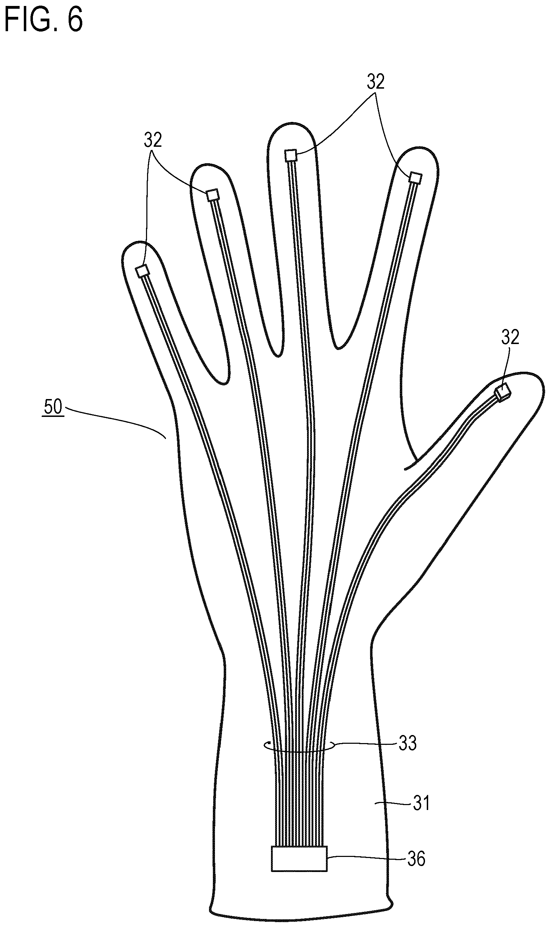

Fig. 6 illustrates a configuration of a sensor module 50 of the third embodiment. In the sensor module 50, a wireless communication device 36 is fixed to the outer surface of the wrist portion of the body 31. The sensor wiring 33 is connected to the wireless communication device 36.

In each of the first and second embodiments, the control device for controlling the robot hand is connected by wire to the sensor module 30, 40, but as in the third embodiment, the control device may be connected wirelessly to the sensor module 50 via the wireless communication device 36.

### [FOURTH EMBODIMENT]

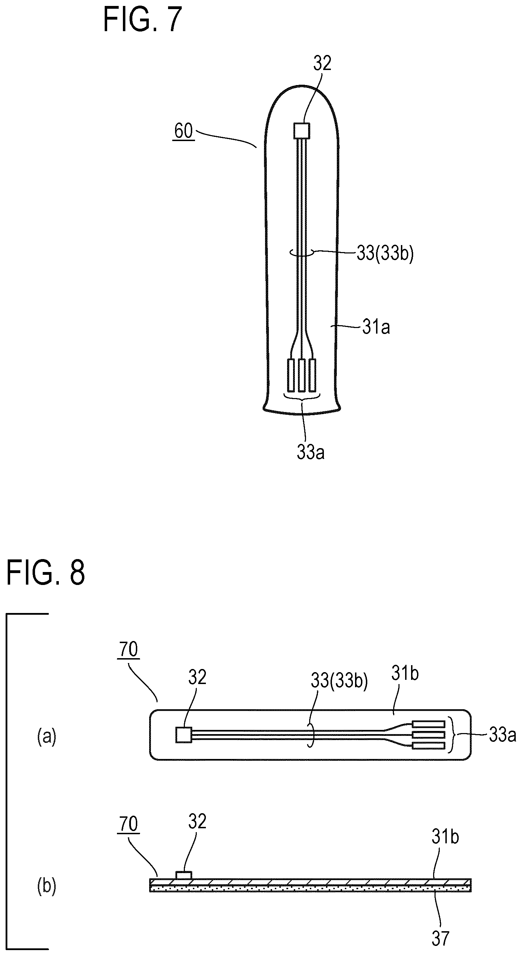

Fig. 7 illustrates a configuration of a sensor module 60 of the fourth embodiment. A body 31a of the sensor module 60 has the shape of a finger cot.

The sensor module 60 is prepared in accordance with the number of fingers and the shape of the finger of the robot hand 20. The sensor module 60 is put on each finger of the robot hand 20. Naturally, it is easy to remove the sensor module 60 from the finger of the robot hand 20. A position on the body 31a where the sensor 32 is fixed is a position corresponding to the fingertip of the finger of the robot hand 20 in a state where the sensor module 60 is mounted on the finger of the robot hand 20.

As thus described, the sensor module 60 having the shape of the finger cot may be used in accordance with the form and function of the robot hand 20.

### [FIFTH EMBODIMENT]

Fig. 8 illustrates a configuration of a sensor module 70 of the fifth embodiment. The sensor module 70 includes a sheet-like body 31b. The body 31b has an elongated rectangular shape corresponding to one finger of the robot hand 20. Pressure-sensitive adhesive 37 is applied onto the surface of the body 31b on the opposite side to the outer surface to which the sensor 32 is fixed.

The sensor module 70 is bonded to each finger of the robot hand 20 with the pressure-sensitive adhesive 37. Naturally, it is easy to remove the sensor module 70 from the finger of the robot hand 20. A position on the body 31b where the sensor 32 is fixed is a position corresponding to the fingertip of the finger of the robot hand 20 in a state where the sensor module 70 is bonded to the finger of the robot hand 20. As thus described, the sheet-like sensor module 70 may be used in accordance with the form and function of the robot hand 20.

As a modification of the sensor module 70, it is possible to employ a configuration in which the sheet-like body 31b has the shape of a hand. Furthermore, in this modification, the proximity sensor 35 may be fixed to a position on the sensor module 70 corresponding to the palm part of the robot hand 20 in the same manner as in Example 2.

As is apparent from the embodiment, by disposing the proximity sensor at the position, in the sensor module, corresponding to the fingertip of the finger of the robot hand, it is possible to accurately and easily grasp the position of the object. By using the proximity sensor, for example, as compared to the case of using a visual sensor that requires image processing for recognition of the object, it is possible to significantly reduce the load of signal processing.

In the sensor module, it is also possible to fix two or more proximity sensors to one finger. By fixing the proximity sensors to one finger, it is possible to detect the relative movement of the object to the finger.

The proximity sensor is not limited to the light-reflecting proximity sensor, but an ultrasonic proximity sensor may be used. A magnetic proximity sensor can also be used in view of the material of the object.

The sensor 32 is not limited to the proximity sensor but may be a tactile sensor. The tactile sensor is a pressure sensor or the like for detecting pressure that is exerted on the fingertip by contact with the object. A pressure sensor may be used as the sensor 32 in view of the function of the robot hand. A unit made up of the proximity sensor and the pressure sensor may be used as the sensor 32. A pressure sensor that can be formed by printing is known, and such a pressure sensor is suitable for the sensor module of the present invention.

The material of the body 31, 31a, 31b is not limited to silicone rubber but may be, for example, urethane rubber or cloth.

The sensor wiring 33 may be covered using an insulating material when necessary.

The MCU 34 for digitizing the detection signal of the sensor may be fixed to each of the sensor modules of the second to fifth embodiment in the same manner as in the first embodiment. When the MCU 34 has a wireless communication function and the MCU 34 is installed as close to the sensor 32 as possible, the sensor wiring 33 is not required.

## Claims

1. A sensor module comprising:
a flexible body; and
a sensor fixed to an outer surface of the flexible body,
wherein
the flexible body is attachable to a robot hand having multiple fingers and is removable from the robot hand,
the sensor is a proximity sensor or a tactile sensor, and
a position on the flexible body where the sensor is fixed corresponds to a fingertip of a finger of the robot hand in a state where the sensor module is attached to the robot hand.

2. The sensor module according to claim 1, wherein the flexible body has a shape of a glove.

3. The sensor module according to claim 1, wherein the flexible body has a shape of a finger cot.

4. The sensor module according to claim 1, wherein the flexible body has a shape of a sheet.

5. The sensor module according to claim 2 or 4, wherein a proximity sensor is fixed to a position on the outer surface corresponding to a palm of the robot hand in a state where the sensor module is attached to the robot hand.

6. The sensor module according to any one of claims 1 to 5, wherein when the sensor is the proximity sensor, the sensor is a light-reflecting proximity sensor.

7. The sensor module according to any one of claims 1 to 6, wherein sensor wiring is formed on the outer surface.

8. The sensor module according to any one of claims 1 to 6, wherein a wireless communication device is provided on the outer surface.

9. A robot system comprising:
a robot hand; and
the sensor module according to claim 7,
wherein
the sensor module is attached to the robot hand, and
a control device for the robot hand is connected by wiring to the sensor wiring.

10. A robot system comprising:
a robot hand; and
the sensor module according to claim 8,
wherein
the sensor module is attached to the robot hand, and
a control device for the robot hand is wirelessly connected to the wireless communication device.
